# EUROPEAN PATENT SPECIFICATION

(11) **EP 4 174 639 B1**
(45) Date of publication and mention of the grant of the patent: **31.12.2025**
(21) Application number: 21918116.1
(22) Date of filing: 17.11.2021
(51) Int. Cl.: G06F 8/33, G06F 8/41

(54) **AUXILIARY PROCESSING METHOD AND DEVICE FOR SOFTWARE DEVELOPMENT, STORAGE MEDIUM AND PROGRAM PRODUCT**
HILFSVERARBEITUNGSVERFAHREN UND -VORRICHTUNG ZUR SOFTWAREENTWICKLUNG, SPEICHERMEDIUM UND PROGRAMMPRODUKT
PROCÉDÉ ET DISPOSITIF DE TRAITEMENT AUXILIAIRE POUR DÉVELOPPEMENT DE LOGICIELS, SUPPORT D'ENREGISTREMENT ET PRODUIT-PROGRAMME

(30) Priority: 22.06.2021 CN 202110693141
(43) Date of publication of application: 03.05.2023
(73) Proprietor: BEIJING BAIDU NETCOM SCIENCE TECHNOLOGY CO., LTD., Beijing 100085 (CN)
(72) Inventor: WANG, Chuqing, Beijing 100085 (CN); ZANG, Zhi, Beijing 100085 (CN); PENG, Yunpeng, Beijing 100085 (CN); LV, Zhiwang, Beijing 100085 (CN); WEI, Jiaxun, Beijing 100085 (CN)
(74) Representative: Nederlandsch Octrooibureau
(86) International application number: PCT/CN2021/131091
(87) International publication number: WO 2022/267310

(56) References cited:
- CN-A- 106 250 112
- CN-A- 108 628 607
- CN-A- 108 733 368
- CN-A- 113 360 144
- US-A1- 2012 174 061
- US-A1- 2012 246 610
- US-B1- 8 281 288
- KEIDEL SVEN S KEIDEL@TUDELFT NL ET AL: "The IDE portability problem and its solution in Monto", PARTIAL EVALUATION AND PROGRAM MANIPULATION, ACM, 2 PENN PLAZA, SUITE 701 NEW YORK NY 10121-0701 USA, 20 October 2016 (2016-10-20), pages 152 - 162, XP058697484, ISBN: 978-1-4503-4721-1, DOI: 10.1145/2997364.2997368
- COULON FABIEN ET AL: "Modular and distributed IDE", PROCEEDINGS OF THE SIGCHI CONFERENCE ON HUMAN FACTORS IN COMPUTING SYSTEMS, ACMPUB27, NEW YORK, NY, USA, 16 November 2020 (2020-11-16), pages 270 - 282, XP059007575, ISBN: 978-1-4503-9170-2, DOI: 10.1145/3426425.3426947
- CHODAREV SERGEJ ET AL: "Visual augmentation of source code editors: A systematic mapping study", ARXIV.ORG, CORNELL UNIVERSITY LIBRARY, 201 OLIN LIBRARY CORNELL UNIVERSITY ITHACA, NY 14853, 6 April 2018 (2018-04-06), XP081425109, DOI: 10.1016/J.JVLC.2018.10.001

## Description

### TECHNICAL FIELD

The present disclosure relates to fields of a software research and development, a cloud server, and the like in computer technology, and in particular, to a method for auxiliary processing of a software development, a device, a storage medium, and a program product.

### BACKGROUND

Various Devops tools exist for code scanning, cloud compilation and other verification functions, and corresponding verification functions for a developed code project are implemented on respective platforms. When using the Devops tool to perform the corresponding verification functions, a developer needs to submit a code to be verified to a corresponding platform, and perform a verification operation such as code scanning or compilation on the corresponding platform. A tool entry is complicated, an interaction logic is rigid, and it is inconvenient for the developer to use, resulting in a low efficiency of a software development.

The document (20 October 2016-KEIDEL SVEN S KEIDEL@TUDELFT NL ET AL: "The IDE portability problem and its solution in Monto", PARTIAL EVALUATION AND PROGRAM MANIPULATION, ACM, 2 PENN PLAZA, SUITE 701 NEW YORK NY 10121-0701 USA, pages 152-162, DOI: 10.1145/2997364.2997368) discloses the IDE portability problem and its solution in Monto.

The document (16 November 2020-COULON FABIEN ET AL: "Modular and distributed IDE", PROCEEDINGS OF THE SIGCHI CONFERENCE ON HUMAN FACTORS IN COMPUTING SYSTEMS, ACMPUB27, NEW YORK, NY, USA, pages 270-282, DOI: 10.1145/3426425.3426947) discloses modular and distributed IDE.

### SUMMARY

The present disclosure provides a method for auxiliary processing of a software development, a device, a storage medium and a program product. The invention is defined by the appended claims.

According to a first aspect of the present disclosure, there is provided a method for auxiliary processing of a software development, including:
identifying, according to an auxiliary operation command information input by a user, an auxiliary research and development function matched with the auxiliary operation command information in a local integrated development environment;
sending an operation request to a service platform corresponding to the auxiliary research and development function in response to determining that the auxiliary research and development function is implemented by the corresponding service platform, wherein the operation request is configured to instruct the service platform to perform an operation corresponding to the auxiliary research and development function, and feed back an execution result of the auxiliary research and development function; and
acquiring the execution result of the auxiliary research and development function.

According to a second aspect of the present disclosure, there is provided an apparatus for auxiliary processing of a software development, including:
a function identification module, configured to identify, according to an auxiliary operation command information input by a user, an auxiliary research and development function matched with the auxiliary operation command information in a local integrated development environment;
a first auxiliary module, configured to send an operation request to a service platform corresponding to the auxiliary research and development function in response to determining that the auxiliary research and development function is implemented by the corresponding service platform, wherein the operation request is configured to instruct the service platform to perform an operation corresponding to the auxiliary research and development function, and feed back an execution result of the auxiliary research and development function; and
an execution result processing module, configured to acquire the execution result of the auxiliary research and development function.

According to a third aspect of the present disclosure, there is provided an electronic device, including:
at least one processor; and
a memory communicatively coupled to the at least one processor; wherein,
the memory stores instructions executable by the at least one processor, the instructions being executed by the at least one processor to enable the at least one processor to perform the method according to the first aspect of the present disclosure.

According to a fourth aspect of the present disclosure, there is provided a non-transitory computer-readable storage medium storing computer instructions, wherein the computer instructions allow a computer to implement the method according to the first aspect.

According to a fifth aspect of the present disclosure, there is provided a computer program product, the computer program product including: a computer program, wherein the computer program is stored in a readable storage medium, at least one processor of an electronic device may read the computer program from the readable storage medium, and the at least one processor executes the computer program to allow the electronic device to perform the method according to the first aspect.

According to the fifth aspect of the present disclosure, there is provided a computer program including program code, wherein the computer program, when executed by a computer, is allowed to implement the method according to any of the embodiments described above.

It should be understood that content described in this section is not intended to identify key or critical features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to provide a better understanding of the present solution, and are not to be construed as limiting the present disclosure.
FIG. 1 shows an exemplary diagram of an effect of an intelligent research and development assistant according to embodiments of the present disclosure.
FIG. 2 shows a flowchart of a method for auxiliary processing of a software development provided by a first embodiment of the present disclosure.
FIG. 3 shows a flowchart of a method for auxiliary processing of a software development provided by a second embodiment of the present disclosure.
FIG. 4 shows an exemplary diagram of an effect of a code scanning function provided by the second embodiment of the present disclosure.
FIG. 5 shows an exemplary diagram of an effect of a compilation function provided by the second embodiment of the present disclosure.
FIG. 6 shows an exemplary diagram of an effect of a function of real-time error correction for coding standard provided by the second embodiment of the present disclosure.
FIG. 7 shows an exemplary diagram of an effect of a coding standard formatting function provided by the second embodiment of the present disclosure.
FIG. 8 shows a schematic diagram of an apparatus for auxiliary processing of a software development provided by a third embodiment of the present disclosure.
FIG. 9 shows a schematic diagram of an apparatus for auxiliary processing of a software development provided by a fourth embodiment of the present disclosure.
FIG. 10 shows a block diagram of an electronic device used to implement a method for auxiliary processing of a software development according to the embodiments of the present disclosure.

### DETAILED DESCRIPTION OF EMBODIMENTS

The following describes exemplary embodiments of the present disclosure with reference to the accompanying drawings, which include various details of the embodiments of the present disclosure to facilitate understanding, and should be considered as merely exemplary. Likewise, for clarity and conciseness, descriptions of well-known functions and structures are omitted in the following description.

The present disclosure provides a method for auxiliary processing of a software development, a device, a storage medium and a program product, and relates to fields of a software research and development, a cloud server, and the like in computer technology, so as to improve an efficiency of a software development.

The method for auxiliary processing of a software development provided by the present disclosure may be specifically applied to a local integrated development environment (IDE) such as VS Code, IDEA, PyCharm, etc. used by a user (such as a researcher) during a software development. An auxiliary research and development function of a software development is provided in the local integrated development environment, such as code scanning, compilation, automatic error correction for coding standard and formatting, etc., so as to empower various auxiliary research and development functions of a software development to the user's local programming site to realize data online of research and development process and capability preposition, which solves local verification capabilities such as code scanning, compilation, automatic error correction for coding standard and formatting, connects an entire development and testing process in series, and is effectively combined with the user's programming site, so as to improve an research and development efficiency of the user.

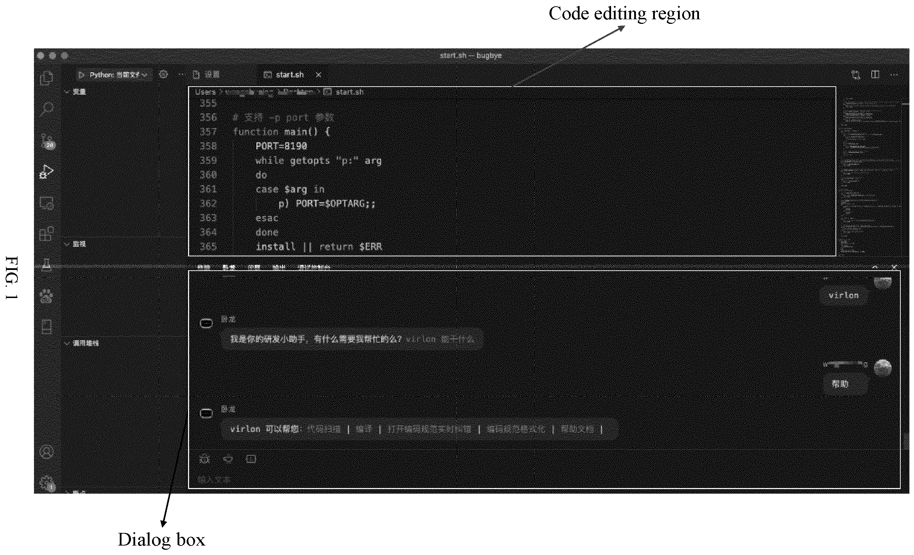

Exemplarily, the method may be implemented by means of an intelligent research and development assistant, etc. By installing the intelligent research and development assistant in a local integrated development environment, the auxiliary processing of software development may be realized. A development interface after the intelligent research and development assistant is installed in the local integrated development environment may be shown in FIG. 1, and a dialog box is displayed in the development interface, and the intelligent research and development assistant realizes a dialogue interaction with a user through the dialog box. The user may input a name or alias (" 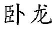 " or "virlon" as shown in FIG. 1) of the intelligent research and development assistant in the dialog box to wake up the intelligent research and development assistant. The intelligent research and development assistant, after being woken up, may display a reply (" 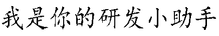 , 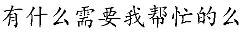 ? virlon 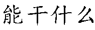 " ("I'm your research and development assistant, what can I do for you? What can virlon do") as shown in FIG. 1). The user may also input auxiliary operation command information in the dialog box to trigger the intelligent research and development assistant to perform a corresponding auxiliary operation. For example, as shown in FIG. 1, the user inputs an auxiliary operation command information " 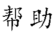 " ("help") to inquire about auxiliary functions that the intelligent research and development assistant may provide. The intelligent research and development assistant displays a response result of "help" in the dialog box, "virlon 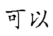 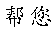 : 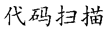 | 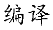 | 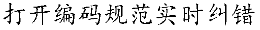 | 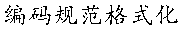 | 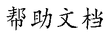 |" ("virlon can help you: code scanning | compilation | opening real-time error correction for coding standard | coding standard formatting | help document |").

In addition, in FIG. 1, the dialog box is only displayed below a code editing region in the development interface as an example for illustration. In an actual application, the dialog box may be displayed in other positions of the development interface, and a size, a location and a shape of the dialog box may be set and adjusted according to needs of an actual application scenario, which is not specifically limited herein.

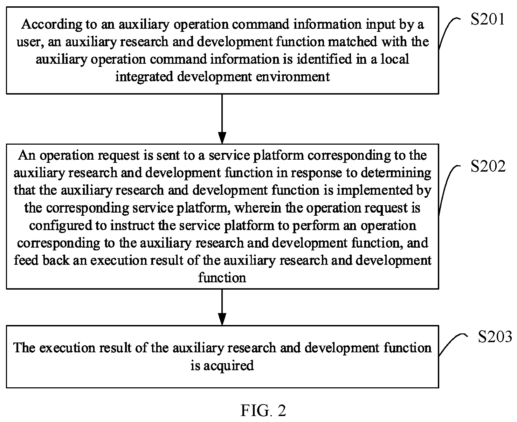

FIG. 2 shows a flowchart of a method for auxiliary processing of a software development provided by a first embodiment of the present disclosure. The method provided in this embodiment may be specifically used for an apparatus for auxiliary processing of a software development. This embodiment takes the apparatus for auxiliary processing being an intelligent research and development assistant as an example for illustrative description. In other embodiments, the apparatus for auxiliary processing of a software development also may be implemented in other manners, which is not specifically limited in this embodiment.

As shown in FIG. 2, specific steps of the method are as follows.

In step S201, according to an auxiliary operation command information input by a user, an auxiliary research and development function matched with the auxiliary operation command information is identified in a local integrated development environment.

In this embodiment, one or more auxiliary research and development functions are integrated in the local integrated development environment. An information input region is provided in the development interface. According to the auxiliary operation command information input by the user in the information input region, the auxiliary research and development function matched with the auxiliary operation command information is identified.

Each auxiliary research and development function has unique identification information, and different auxiliary research and development functions may be distinguished through the identification information.

For example, a name, alias, etc. of the auxiliary research and development function may be used as the identification information, and other information of the auxiliary research and development function that is easily recognized and remembered by the user may be used as the identification information, which may be set according to an actual application scenario, and is not limited specifically herein.

Optionally, when the auxiliary operation command information input by the user is matched with the identification information of the auxiliary research and development function, it is determined that the auxiliary operation command information is matched with the auxiliary research and development function.

In step S202, an operation request is sent to a service platform corresponding to the auxiliary research and development function in response to determining that the auxiliary research and development function is implemented by the corresponding service platform. The operation request is used to instruct the service platform to perform an operation corresponding to the auxiliary research and development function, and feed back an execution result of the auxiliary research and development function.

In this embodiment, the auxiliary research and development function integrated in the local integrated development environment may not be implemented locally, but by a service platform corresponding to the auxiliary research and development function.

If the auxiliary research and development function is implemented by the corresponding service platform, then the intelligent research and development assistant automatically initiates a corresponding operation request of the auxiliary research and development function to the corresponding service platform, without requiring manual operation by the user.

The operation request includes data required by the service platform to perform the operation corresponding to the auxiliary research and development function.

After receiving the operation request, the service platform corresponding to the auxiliary research and development function performs the operation corresponding to the auxiliary research and development function, so as to obtain the execution result of the auxiliary research and development function, and feed backs the execution result of the auxiliary research and development function to the intelligent research and development assistant.

In step S203, the execution result of the auxiliary research and development function is acquired.

The intelligent research and development assistant acquires the execution result of the auxiliary research and development function fed back by the service platform corresponding to the auxiliary research and development function.

In this embodiment, one or more auxiliary research and development functions are integrated in the local integrated development environment. In the local integrated development environment, according to the auxiliary operation command information input by the user, the auxiliary research and development function matched with the auxiliary operation command information is identified. If it is determined that the auxiliary research and development function is implemented by the corresponding service platform, then the operation request is automatically sent to the service platform corresponding to the auxiliary research and development function, so that the service platform performs the operation corresponding to the auxiliary research and development function according to the operation request and feeds back the execution result of the auxiliary research and development function, so as to obtain the execution result of the auxiliary research and development function, and empower the auxiliary research and development function of a software development to the user's local programming site. The auxiliary research and development function is effectively combined with the user's programming site without manual operation, thereby improving a research and development efficiency of a user.

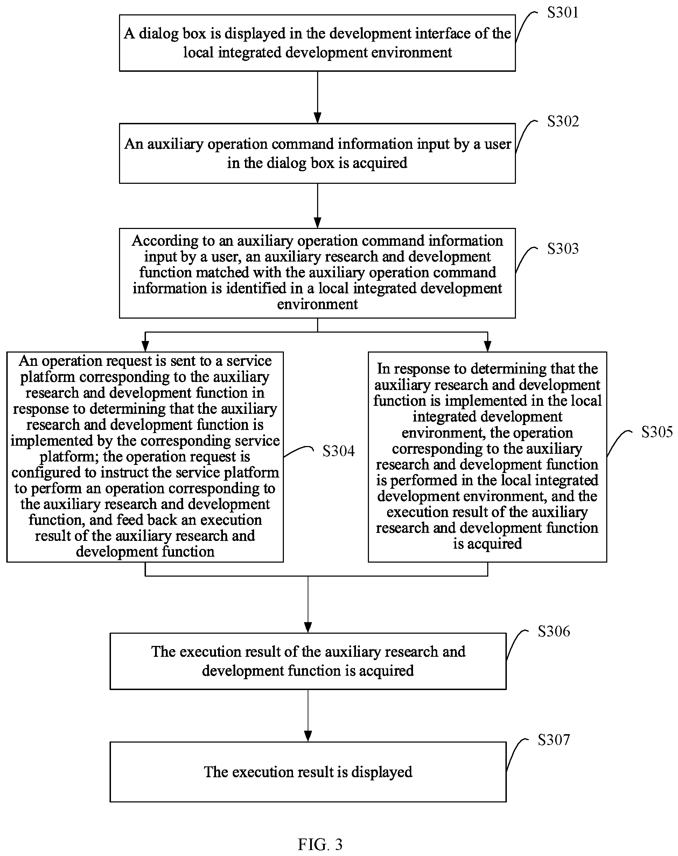

FIG. 3 shows a flowchart of a method for auxiliary processing of a software development provided by a second embodiment of the present disclosure. On the basis of the first embodiment described above, in this embodiment, a flow of the auxiliary processing of software development is exemplarily described by taking an example in which the auxiliary processing method of software development is implemented by means of an intelligent research and development assistant.

In this embodiment, after identifying, according to an auxiliary operation command information input by a user, an auxiliary research and development function matched with the auxiliary operation command information in a local integrated development environment, the method further includes: performing, if it is determined that the auxiliary research and development function is implemented in the local integrated development environment, an operation corresponding to the auxiliary research and development function in the local integrated development environment, and acquiring an execution result of the auxiliary research and development function.

As shown in FIG. 3, specific steps of the method are as follows.

In step S301, a dialog box is displayed in the development interface of the local integrated development environment.

One or more auxiliary research and development functions are integrated in the local integrated development environment. An information input region is provided in the development interface. According to the auxiliary operation command information input by the user in the information input region, the auxiliary research and development function matched with the auxiliary operation command information is identified.

In this embodiment, the information input region may be a dialog box, and the dialog box is displayed in the development interface of the local integrated development environment after the auxiliary research and development function is integrated in the local integrated development environment. A visual interaction between the user and the intelligent research and development assistant may be realized through a dialogue-like interaction mode, and operation results of various auxiliary research and development functions may be displayed intuitively, a friendliness of the interaction of the intelligent research and development assistant may be improved.

Optionally, the intelligent research and development assistant may be implemented in a form of a plug-in, and the intelligent research and development assistant plug-in is installed in the local integrated development environment, and the intelligent research and development assistant plug-in is used to realize the auxiliary processing of software development.

After the intelligent research and development assistant plug-in is successfully installed, a dialog box is displayed in the development interface of the local integrated development environment. In this way, the intelligent research and development assistant is empowered to the local integrated development environment in a form of a plug-in, which may effectively combine various software development auxiliary research and development functions with a local programming thread, and may improve a usability of the intelligent research and development assistant.

In step S302, an auxiliary operation command information input by a user in the dialog box is acquired.

The user may input the auxiliary operation command information in the dialog box displayed on the development interface.

The intelligent research and development assistant may acquire the auxiliary operation command information input by the user in the dialog box.

Through the above-mentioned steps S301 to S302, the visual interaction between the user and the intelligent research and development assistant may be realized through the dialogue-like interaction mode, the operation results of various auxiliary research and development functions may be presented intuitively, and the friendliness of the interaction of the intelligent research and development assistant may be improved.

In step S303, according to an auxiliary operation command information input by a user, an auxiliary research and development function matched with the auxiliary operation command information is identified in a local integrated development environment.

Each auxiliary research and development function has unique identification information, and different auxiliary research and development functions may be distinguished through the identification information.

For example, a name, alias, command, etc. of the auxiliary research and development function may be used as the identification information, and other information of the auxiliary research and development function that is easily recognized and remembered by the user may also be used as the identification information, which may be set according to an actual application scenario, and is not specifically limited herein.

Optionally, when the auxiliary operation command information input by the user is matched with the identification information of the auxiliary research and development function, it is determined that the auxiliary operation command information is matched with the auxiliary research and development function.

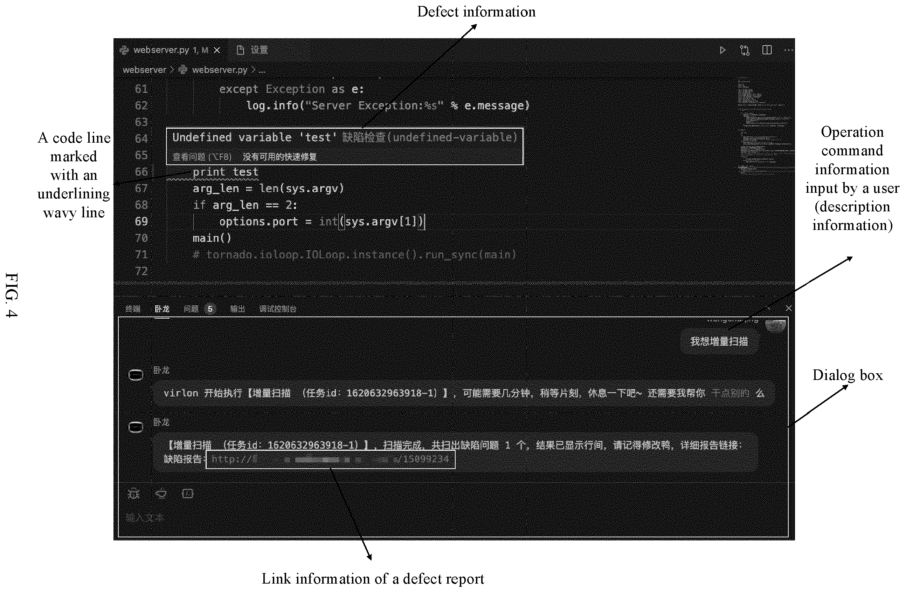

For example, a code scanning function includes an increment scanning function and a full scanning function. Taking the increment scanning function as an example, the identification information may include a function name "increment scanning". As shown in FIG. 4, when the auxiliary operation command information input by the user is " 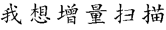 " ("I want an increment scanning"), the intelligent research and development assistant may recognize that the input auxiliary operation command information contains the name of the increment scanning function "increment scanning", so as to determine that the auxiliary research and development function matched with the auxiliary operation command information is the increment scanning function.

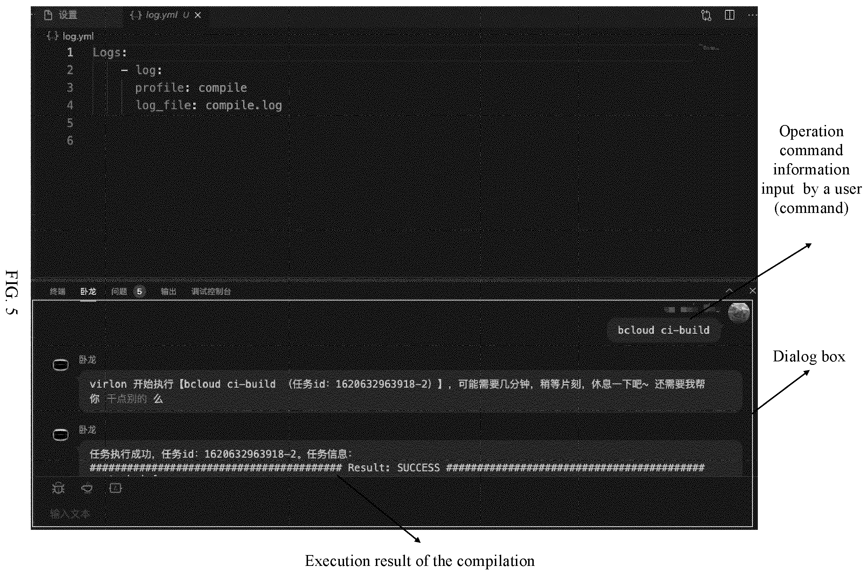

Exemplarily, the auxiliary operation command information input by the user may be a description language (as shown in FIG. 4, FIG. 6, and FIG. 7), a command (as shown in FIG. 5), or information submitted by clicking an option.

Natural language processing is performed on the auxiliary operation command information input by the user to determine the auxiliary research and development function matched with the auxiliary operation command information, which may accurately identify the auxiliary research and development function matched with the auxiliary operation command information, and improve an accuracy and usability of the intelligent research and development assistant.

If it fails to determine the auxiliary research and development function matched with the auxiliary operation command information, an error prompt information is displayed. The error prompt information is used to remind the user that the auxiliary operation command information input by the user is inaccurate, and the matching auxiliary research and development function may not be identified. This may facilitate the user to re-input, which improves the friendliness and usability of the intelligent research and development assistant.

For example, the user may be informed of an error prompt information " 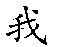 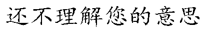 " ("I don't understand what you mean yet") in a form of a dialog in a dialog box.

In step S304, an operation request is sent to a service platform corresponding to the auxiliary research and development function in response to determining that the auxiliary research and development function is implemented by the corresponding service platform. The operation request is used to instruct the service platform to perform an operation corresponding to the auxiliary research and development function, and feed back an execution result of the auxiliary research and development function.

In this embodiment, the auxiliary research and development functions implemented by the corresponding service platform may be integrated into the local integrated development environment.

The auxiliary research and development functions implemented by the corresponding service platform include but are not limited to: code scanning and compilation. The code scanning may include increment scanning and full scanning, and the increment scanning and the full scanning may be used as an independent auxiliary research and development function respectively.

After determining the auxiliary research and development function matched with the auxiliary operation command information, if the auxiliary research and development function is implemented by the corresponding service platform, then the intelligent research and development assistant automatically initiates a corresponding operation request of the auxiliary research and development function to the corresponding service platform, without requiring manual operation by the user.

The operation request includes data required by the service platform to perform the operation corresponding to the auxiliary research and development function.

After receiving the operation request, the service platform corresponding to the auxiliary research and development function performs the operation corresponding to the auxiliary research and development function, so as to obtain the execution result of the auxiliary research and development function, and feeds back the execution result of the auxiliary research and development function to the intelligent research and development assistant.

Optionally, after sending the operation request to the service platform corresponding to the auxiliary research and development function, and before obtaining the execution result of the auxiliary research and development function, a prompt information indicating that the auxiliary research and development function is being executed may also be displayed in the dialog box to show a progress of the auxiliary research and development function to the user, which improves the friendliness and usability of the intelligent research and development assistant.

In step S305, in response to determining that the auxiliary research and development function is implemented in the local integrated development environment, the operation corresponding to the auxiliary research and development function is performed in the local integrated development environment, and the execution result of the auxiliary research and development function is acquired.

In this embodiment, an auxiliary research and development function directly implemented locally may be integrated into the local integrated development environment.

The auxiliary research and development functions directly implemented locally include but are not limited to: real-time error correction for coding standard, and coding standard formatting.

After determining the auxiliary research and development function matched with the auxiliary operation command information, if it is determined that the auxiliary research and development function is implemented in the local integrated development environment, the intelligent research and development assistant directly performs the operation corresponding to the auxiliary research and development function in the local integrated development environment, and obtains the execution result of the auxiliary research and development function.

Optionally, after the operation corresponding to the auxiliary research and development function is performed in the local integrated development environment, and before the execution result of the auxiliary research and development function is acquired, a prompt information indicating that the auxiliary research and development function is being performed may also be displayed in the dialog box to show a progress of the auxiliary research and development function to the user, which improves the friendliness and usability of the intelligent research and development assistant.

In step S306, the execution result of the auxiliary research and development function is acquired.

The local integrated development environment may integrate not only the auxiliary research and development functions such as code scanning and compilation implemented by the corresponding service platform, but also the auxiliary research and development functions such as real-time error correction for coding standard and coding standard formatting implemented directly locally. Whether the auxiliary research and development function is implemented locally or on the corresponding service platform, the intelligent research and development assistant may acquire the execution result of the auxiliary research and development function.

If the auxiliary research and development function is implemented by the corresponding service platform, the intelligent research and development assistant acquires the execution result of the auxiliary research and development function fed back by the corresponding service platform.

If the auxiliary research and development function is implemented in the local integrated development environment, the intelligent research and development assistant may acquire the execution result of the auxiliary research and development function after performing the operation corresponding to the auxiliary research and development function.

In step S307, the execution result is displayed.

In this embodiment, the execution result may be displayed in the dialog box in a form of dialog interaction.

After acquiring the execution result of the auxiliary research and development function, the intelligent research and development assistant may display the execution result in the dialog box in the form of dialog interaction, and may intuitively display the execution result of the auxiliary research and development function to the user.

The local integrated development environment may integrate not only the auxiliary research and development functions such as code scanning and compilation implemented by the corresponding service platform, but also the auxiliary research and development functions such as real-time error correction for coding standard and coding standard formatting implemented directly locally, so as to empower various auxiliary research and development functions of software development to the user's local programming site to realize data online of research and development process and capability preposition, solve local verification capabilities such as code scanning, compilation, automatic error correction for coding standard and formatting, connect an entire development and testing process in series, and effectively combine the auxiliary research and development function with the user's programming site to improve an research and development efficiency of the user.

If the auxiliary research and development function is code scanning, then a file in a current work region is acquired, so that a development file to be processed is obtained. A code scanning request is sent to a code scanning platform. The code scanning request includes the development file to be processed, and the code scanning request is used to instruct the code scanning platform to perform code scanning on the development file and return the code scanning result.

The file in the current work region is automatically packaged by the intelligent research and development assistant as a file to be scanned. When an operation request is sent to the code scanning platform, the file to be scanned will be sent to the code scanning platform together, without requiring the user to manually upload codes to the code scanning platform and trigger a scanning operation, which simplifies the user's operation process and improves an efficiency of the user's software development.

The code scanning function may realize a scanning of a coding standard problem, a defect problem, a security loophole, etc. in a file.

Further, acquiring the execution result of the auxiliary research and development function includes: acquiring the code scanning result of the development file.

The code scanning result includes a defect report. After acquiring the code scanning result of the development file, the intelligent research and development assistant also parses the defect report and locate a location of a defect in the development file, and mark the code line with the defect in the development file according to the location of the defect in the development file.

In this way, a defect existing in the code may be visually marked on a programming site, and the user does not need to check a position of the code with defect in the development file by himself by referring to the defect report, which is convenient for the user to locate the defect position, promotes the user to find and solve the defect as soon as possible, and improves the efficiency of software development.

When the marked code line is selected, the defect information corresponding to the marked code line is displayed (as shown in FIG. 4) to facilitate the user to view detailed defect information without affecting the user's code editing operation, which is convenient for the user to operate, and is conducive to improve the efficiency of software development.

For example, the code line with the defect may be marked in the development file by underlining a wavy line, underlining a red wavy line, adding a background color, and the like. When the user moves a mouse cursor to the marked code line, the defect information corresponding to the marked code line is displayed.

In addition, a method of marking the code line with the defect in the development file may be set and adjusted according to an actual application scenario, and different types of defects may be marked in different ways, which is not specifically limited in this embodiment.

Optionally, link information of the defect report may also be displayed (as shown in FIG. 4). When the link information of the defect report is triggered, the defect report is displayed and/or downloaded to facilitate the user to view and download the defect report.

In an alternative embodiment, if the auxiliary research and development function is compilation, then a compilation request is sent to the compilation platform, the compilation request includes information of the code to be compiled, and the compilation request is used to instruct the compilation platform to compile the code to be compiled and obtain a compilation result file.

The compilation request is automatically sent to the compilation platform through the intelligent research and development assistant, without requiring the user to manually open the compilation platform and trigger the compilation operation, which simplifies the user's operation process and improves the efficiency of the user's software development.

Further, acquiring the execution result of the auxiliary research and development function includes: pulling the compilation result file into the local integrated development environment automatically.

Optionally, the compilation request is also used to instruct the compilation platform to record a compilation log. After sending the compilation request to the compilation platform, the intelligent research and development assistant may also display the link information of the compilation log. When the link information of the compilation log is triggered, the compilation log is displayed and/or downloaded to facilitate the user to view and download the compilation log.

Exemplarily, the execution result of the compilation may include whether a compilation task is successfully performed, and relevant information of the compilation task. As shown in FIG. 5, the execution result of the compilation may be displayed in a dialog mode in a dialog box.

In an alternative embodiment, if the auxiliary research and development function is the real-time error correction for coding standard, then a coding standard problem in the current file is checked in real time. In the current file, a location of the coding standard problem and problem description information of the coding standard problem are displayed.

In this way, the coding standard problem existing in the code may be visually displayed on the programming site, without requiring the user to check the development file specification problem, which is convenient for the user to locate the location of the coding standard problem, and promotes the user to find and correct the coding standard problem in the file as soon as possible, and improves the standardization of the code and the efficiency of software development.

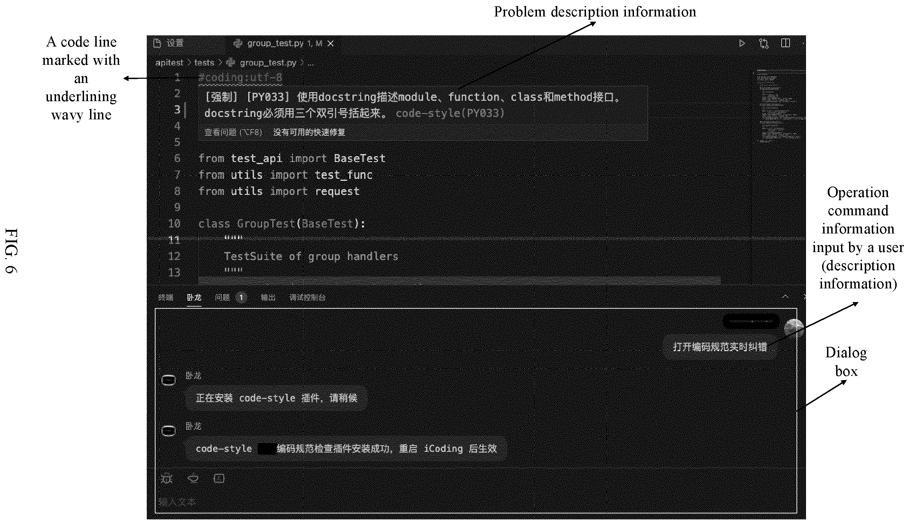

Optionally, displaying the location of the coding standard problem and the problem description information of the coding standard problem in the current file include the following operations. The code line with coding standard problem is marked in the current file. When the marked code line is selected, the problem description information of the coding standard problem corresponding to the marked code line is displayed (as shown in FIG. 6) to facilitate the user to view the detailed problem description information of the coding standard problem without affecting the user's code editing operation, which is convenient for the user to operate, and is conducive to improve the efficiency of software development.

For example, the code line with the coding standard problem may be marked in the development file by underlining a wavy line, underlining a red wavy line, adding a background color, and the like. When the user moves a mouse cursor to the marked code line, the problem description information of the coding standard problem corresponding to the marked code line is displayed.

In addition, a method of marking the code line with coding standard problem in the development file may be set and adjusted according to an actual application scenario, which is not specifically limited in this embodiment.

In this embodiment, the function of real-time error correction for coding standard may be turned on or off. After the function of real-time error correction for coding standard is turned on, the intelligent research and development assistant performs the processing of the real-time error correction for coding standard on the current file in real time. When the function of real-time error correction for coding standard is turned off, the intelligent research and development assistant will no longer performs the processing of the real-time error correction for coding standard.

In an alternative embodiment, if the auxiliary research and development function is coding standard formatting, the coding standard problem in the current file is corrected.

In this way, the intelligent research and development assistant may automatically correct coding standard problems in the current file without requiring the user to manually modify the coding standard problems one by one, which greatly improves the efficiency of software development.

Optionally, after correcting the coding standard problem in the current file, the method further includes: restoring the current file to a state before the correction in response to a formatting undo operation on the current file.

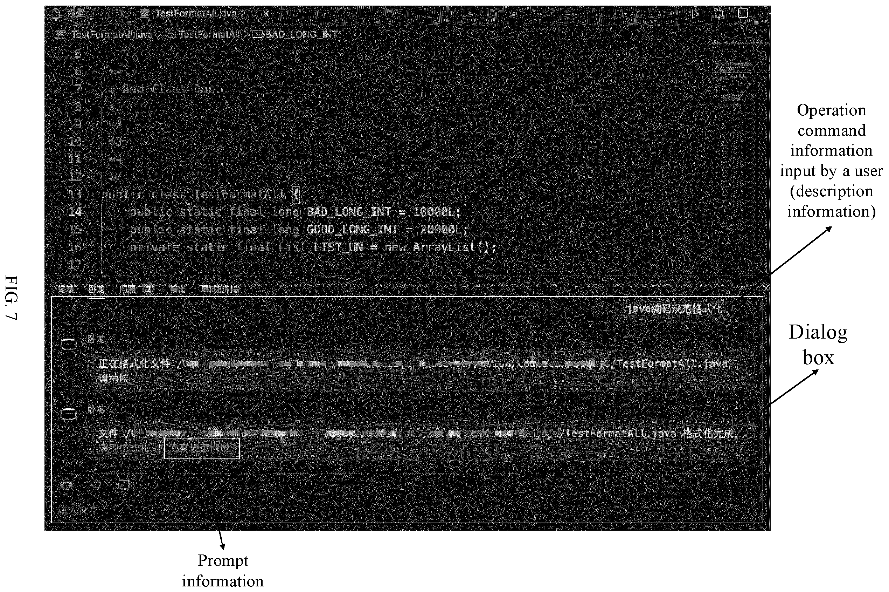

Optionally, after correcting the coding standard problem in the current file, if there is a coding standard problem that may not be corrected automatically, a prompt information for prompting that there is a coding standard problem that may not be corrected may be displayed (as shown in FIG. 7, a prompt information " 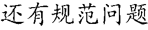 ? " "Is there another specification problem?" is displayed). Further, in response to a request to view the coding standard problem that may not be corrected, the coding standard problem that may not be corrected is displayed to facilitate the user view and manually correct.

Optionally, the function of coding standard formatting may correct the coding standard problem in the current file based on the coding standard problem in the current file in the execution result of the real-time error correction for coding standard after the real-time error correction for coding standard is performed.

In addition, the function of coding standard formatting may also be performed independently, and a process of performing coding standard formatting includes: checking the coding standard problem in the current file, and correcting the coding standard problem in the current file.

Optionally, the intelligent research and development assistant plug-in may realize all the auxiliary research and development functions described above, that is, all the auxiliary research and development functions may be integrated into one plug-in. By installing the plug-in in the local integrated development environment, all the auxiliary research and development functions may be realized in the local integrated development environment.

Optionally, any of the auxiliary research and development functions may be implemented as a separate plug-in. For example, the function of real-time error correction for coding standard may be implemented with a separate coding standard checking plug-in. When the real-time error correction for coding standard needs to be turned on, the coding standard checking plug-in needs to be installed in the local integrated development environment. After the coding standard checking plug-in is successfully installed, the function of real-time error correction for coding standard may be turned on by restarting the local integrated development environment. An example of installing the coding standard checking plug-in is shown in FIG. 6.

The local integrated development environment may integrate not only the auxiliary research and development functions such as code scanning and compilation implemented by the corresponding service platform, but also the auxiliary research and development functions such as real-time error correction for coding standard and coding standard formatting implemented directly locally, so as to empower various auxiliary research and development functions of software development to the user's local programming site to realize data online of research and development process and capability preposition, solve local verification capabilities such as code scanning, compilation, automatic error correction for coding standard and formatting, connect an entire development and testing process in series, and effectively combine the auxiliary research and development function with the user's programming site to improve an research and development efficiency of the user.

In the embodiments of the present disclosure, various auxiliary research and development functions are empowered to the local IDE at an engineer programming site, and conventional research and development operations such as code scanning, compilation, real-time error correction for coding standard and formatting are performed through a dialogue-like interaction, so that the interaction mode is smoother, and various operation results may be visually presented. A development testing capability is shifted to the left, a local verification capability is supplemented, the entire development and testing process is connected in series, a closed loop is formed, and entrances of various Devops research and development tools are unified, which solves problems of complex tool entrances, cumbersome switching, and low use efficiency. The auxiliary research and development function is effectively combined with the engineer programming site, which improves the research and development efficiency.

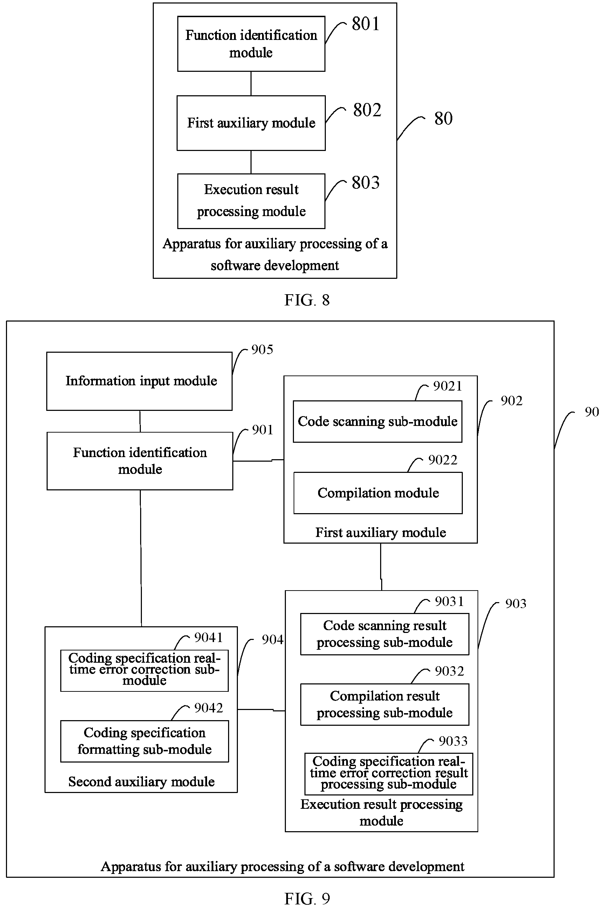

FIG. 8 shows a schematic diagram of an apparatus for auxiliary processing of a software development provided by the third embodiment of the present disclosure. The apparatus for auxiliary processing of a software development provided by the embodiment of the present disclosure may perform a processing flow provided by the embodiment of the method for auxiliary processing of a software development. As shown in FIG. 8, an apparatus 80 for auxiliary processing of a software development includes: a function identification module 801, a first auxiliary module 802 and an execution result processing module 803.

Specifically, the function identification module 801 is used to identify, according to an auxiliary operation command information input by a user, an auxiliary research and development function matched with the auxiliary operation command information in a local integrated development environment.

The first auxiliary module 802 is used to send an operation request to a service platform corresponding to the auxiliary research and development function in response to determining that the auxiliary research and development function is implemented by the corresponding service platform. The operation request is used to instruct the service platform to perform an operation corresponding to the auxiliary research and development function, and feeds back an execution result of the auxiliary research and development function.

The execution result processing module 803 is used to acquire the execution result of the auxiliary research and development function.

The apparatus provided by the embodiment of the present disclosure may be specifically used to execute the method embodiment provided by the first embodiment described above, and the specific functions will not be repeated herein.

In this embodiment, one or more auxiliary research and development functions are integrated in the local integrated development environment. In the local integrated development environment, according to the auxiliary operation command information input by the user, the auxiliary research and development function matched with the auxiliary operation command information is identified. If it is determined that the auxiliary research and development function is implemented by the corresponding service platform, then the operation request is automatically sent to the service platform corresponding to the auxiliary research and development function, so that the service platform performs the operation corresponding to the auxiliary research and development function according to the operation request and feeds back the execution result of the auxiliary research and development function, so as to obtain the execution result of the auxiliary research and development function, and empower the auxiliary research and development function of a software development to the user's local programming site. The auxiliary research and development function is effectively combined with the user's programming site without manual operation, thereby improving a research and development efficiency of a user.

FIG. 9 shows a schematic diagram of an apparatus for auxiliary processing of a software development provided by a fourth embodiment of the present disclosure. The auxiliary processing of a software development provided by the embodiment of the present disclosure may execute the processing flow provided by the embodiment of the method for auxiliary processing of a software development. As shown in FIG. 9, the apparatus 90 for auxiliary processing of a software development includes: a function identification module 901, a first auxiliary module 902, and an execution result processing module 903.

Specifically, the function identification module 901 is used to identify, according to an auxiliary operation command information input by a user, an auxiliary research and development function matched with the auxiliary operation command information in a local integrated development environment.

The first auxiliary module 902 is used to send an operation request to a service platform corresponding to the auxiliary research and development function in response to determining that the auxiliary research and development function is implemented by the corresponding service platform. The operation request is used to instruct the service platform to perform an operation corresponding to the auxiliary research and development function, and feeds back an execution result of the auxiliary research and development function.

The execution result processing module 903 is used to acquire the execution result of the auxiliary research and development function.

In an alternative embodiment, as shown in FIG. 9, the first auxiliary module 902 includes:
a code scanning sub-module 9021, used to acquire, in response to the auxiliary research and development function is code scanning, a file in a current work region to obtain a development file to be processed; and send a code scanning request to a code scanning platform, the code scanning request includes the development file to be processed, and the code scanning request is used to instruct the code scanning platform to perform the code scanning on the development file and return a code scanning result.

The execution result processing module 903 includes:
a code scanning result processing sub-module 9031, used to acquire the code scanning result of the development file.

In an alternative embodiment, the code scanning result includes a defect report, and the code scanning result processing sub-module is further used to:
parse the defect report, so as to locate a location of a defect in the development file after acquiring the code scanning result of the development file; and mark a code line with the defect in the development file according to the location of the defect in the development file.

In an alternative embodiment, the code scanning result processing sub-module is further used to:
display defect information corresponding to the marked code line when the marked code line is selected, after marking a code line with the defect in the development file according to the location of the defect in the development file.

In an alternative embodiment, the code scanning result processing sub-module is further used to:
display link information of the defect report after acquiring the code scanning result of the development file; and display and/or download the defect report when the link information of the defect report is triggered.

In an alternative embodiment, as shown in FIG. 9, the first auxiliary module 902 includes:
a compilation module 9022, used to send a compilation request to a compilation platform when the auxiliary research and development function is compilation, the compilation request includes information of a code to be compiled, and the compilation request is used to instruct the compilation platform to compile the code to be compiled and obtain a compilation result file.

The execution result processing module 903 includes:
a compilation result processing sub-module 9032, used to pull the compilation result file into the local integrated development environment automatically.

In an alternative embodiment, the compilation request is further used to instruct the compilation platform to record a compilation log.

The compilation result processing sub-module is further used to:
display link information of the compilation log after sending a compilation request to a compilation platform; and display and/or download the compilation log when the link information of the compilation log is triggered.

In an alternative embodiment, as shown in FIG. 9, the apparatus 90 for auxiliary processing of a software development includes:
a second auxiliary module 904, used to perform, if it is determined that the auxiliary research and development function is implemented in the local integrated development environment, the operation corresponding to the auxiliary research and development function in the local integrated development environment and acquire the execution result of the auxiliary research and development function.

In an alternative embodiment, as shown in FIG. 9, the second auxiliary module 904 includes:
a real-time error correction for coding standard sub-module 9041, used to check a coding standard problem in the current file in real time when the auxiliary research and development function is real-time error correction for coding standard.

The execution result processing module 903 includes:
a real-time error correction for coding standard result processing sub-module 9033, used to display a location of the coding standard problem and problem description information of the coding standard problem in the current file.

In an alternative embodiment, the real-time error correction for coding standard result processing sub-module is further used to:
mark a code line with the coding standard problem in the current file; and display the problem description information of the coding standard problem corresponding to the marked code line when the marked code line is selected.

In an alternative embodiment, as shown in FIG. 9, the second auxiliary module 904 further includes:
a coding standard formatting sub-module 9042, used to correct the coding standard problem in the current file when the auxiliary research and development function is coding standard formatting.

In an alternative embodiment, the coding standard formatting sub-module is further used to:
restore the current file to a state before the correcting. in response to a formatting undo operation on the current file.

In an alternative embodiment, the function identification module is further used to:
perform natural language processing on the auxiliary operation command information input by the user, so as to determine the auxiliary research and development function matched with the auxiliary operation command information.

In an alternative embodiment, the function identification module is further used to:
display an error prompt information if it fails to determine the auxiliary research and development function matched with the auxiliary operation command information.

In an alternative embodiment, as shown in FIG. 9, the apparatus 90 for auxiliary processing of a software development further includes:
an information input module 905, used to
before identifying, according to an auxiliary operation command information input by a user, an auxiliary research and development function matched with the auxiliary operation command information in a local integrated development environment, display a dialog box in a development interface of the local integrated development environment, and acquire the auxiliary operation command information input by the user in the dialog box.

In an alternative embodiment, the execution result processing module is further used to:
display the execution result in a dialog interaction manner in the dialog box.

In an alternative embodiment, the execution result processing module is further used to:
display, in the dialog box, a prompt information indicating that the auxiliary research and development function is being executed.

The apparatus provided by the embodiment of the present disclosure may be specifically used to execute the method embodiment provided by the second embodiment described above, and the specific functions will not be repeated herein.

The local integrated development environment may integrate not only the auxiliary research and development functions such as code scanning and compilation implemented by the corresponding service platform, but also the auxiliary research and development functions such as real-time error correction for coding standard and coding standard formatting implemented directly locally, so as to empower various auxiliary research and development functions of software development to the user's local programming site to realize data online of research and development process and capability preposition, solve local verification capabilities such as code scanning, compilation, automatic error correction for coding standard and formatting, connect an entire development and testing process in series, and effectively combine the auxiliary research and development function with the user's programming site to improve an research and development efficiency of the user.

In the embodiments of the present disclosure, various auxiliary research and development functions are empowered to the local IDE at an engineer programming site, and conventional research and development operations such as code scanning, compilation, real-time error correction for coding standard and formatting are performed through a dialogue-like interaction, so that the interaction mode is smoother, and various operation results may be visually presented. A development testing capability is shifted to the left, a local verification capability is supplemented, the entire development and testing process is connected in series, a closed loop is formed, and entrances of various Devops research and development tools are unified, which solves problems of complex tool entrances, cumbersome switching, and low use efficiency. The auxiliary research and development function is effectively combined with the engineer programming site, which improves the research and development efficiency.

In the technical solution of the present disclosure, the collection, storage, use, processing, transmission, provision, disclosure, and application of the user's personal information involved are in compliance with the provisions of relevant laws and regulations, take essential confidentiality measures, and do not violate public order and good customs.

In the technical solution of the present disclosure, authorization or consent is obtained from the user before the user's personal information is obtained or collected.

According to the embodiments of the present disclosure, the present disclosure further provides an electronic device and a readable storage medium.

According to the embodiments of the present disclosure, the present disclosure further provides a computer program product, the computer program product includes: a computer program stored in the readable storage medium; at least one processor of the electronic device may read the computer program from the readable storage medium, and at least one processor executes the computer program so that the electronic device executes the solution provided by any of the embodiments described above.

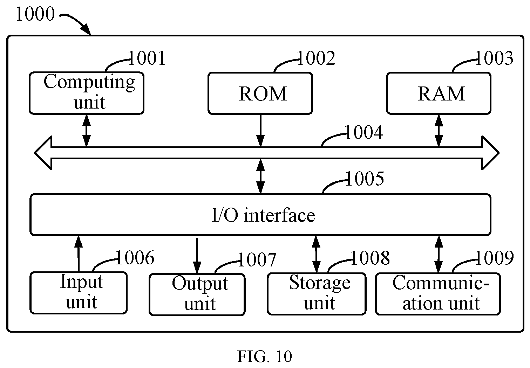

FIG. 10 shows a schematic block diagram of an example electronic device 1000 that may be configured to implement the embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. The components shown herein, their connections and relationships, and their functions are meant to be examples only, and are not intended to limit implementations of the disclosure described and /or claimed herein.

As shown in FIG. 10, the electronic device 1000 includes a computing unit 1001, which may perform various appropriate actions and processes according to a computer program stored in a read only memory (ROM) 1002 or a computer program loaded from a storage unit 1008 into a random access memory (RAM) 1003. In the RAM 1003, various programs and data necessary for an operation of the device 1000 may also be stored. The computing unit 1001, the ROM 1002, and the RAM 1003 are connected to each other through a bus 1004. An input/output (I/O) interface 1005 is also connected to the bus 1004.

A plurality of components in the device 1000 are connected to the I/O interface 1005, including: an input unit 1006, such as a keyboard, a mouse, etc.; an output unit 1007, such as various types of displays, speakers, etc.; a storage unit 1008, such as a magnetic disk, an optical disk, etc.; and a communication unit 1009, such as a network card, a modem, a wireless communication transceiver, etc. The communication unit 1009 allows the device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include, but are not limited to, a central processing unit (CPU), a graphics processing unit (GPU), various specialized artificial intelligence (AI) computing chips, various computing units that run a machine learning model algorithm, a digital signal processing processor (DSP), and any suitable processor, controller, microcontroller, etc. The computing unit 1001 performs the various methods and processes described above, such as the method for auxiliary processing of a software development. For example, in some embodiments, the method for auxiliary processing of a software development may be implemented as a computer software program tangibly contained in a machine-readable medium, such as the storage unit 1008. In some embodiments, part or all of the computer program may be loaded and/or installed on the device 1000 via the ROM 1002 and/or the communication unit 1009. When the computer program is loaded into the RAM 1003 and executed by the computing unit 1001, one or more steps of the method for auxiliary processing of a software development described above may be performed. Alternatively, in other embodiments, the computing unit 1001 may be configured to perform the method for auxiliary processing of a software development by any other suitable means (e.g., by means of firmware).

Various embodiments of the systems and techniques described above herein may be implemented in a digital electronic circuitry system, an integrated circuit system, a field programmable gate array (FPGA), an application specific integrated circuit (ASIC), an application specific standard product (ASSP), a system on chip (SOC), a load programmable logic device (CPLD), a computer hardware, a firmware, a software, and/or a combination thereof. These various embodiments may include: being implemented in one or more computer programs; the one or more computer programs may be executed and/or interpreted on a programmable system including at least one programmable processor; the programmable processor may be a special-purpose or general-purpose programmable processor; data and instructions may be received from a storage system, at least one input device, and at least one output device, and the data and instructions may be transmitted to the storage system, the at least one input device, and the at least one output device.

The program code for implementing the method of the present disclosure may be written in any combination of one or more programming languages. The program code may be provided to a processor or controller of a general purpose computer, a special purpose computer or other programmable data processing apparatus, such that the program code, when executed by the processor or controller, performs functions/operations specified in the flowchart and/or the block diagram. The program code may be executed entirely on a machine, partly on a machine, as a stand-alone software package, partly on a machine and partly on a remote machine, or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable media may include, but are not limited to, an electronic, magnetic, optical, electromagnetic, infrared, or semiconductor system, apparatus, or device, or any suitable combination of the foregoing. More specific examples of the machine-readable storage media would include an electrical connection based on one or more wires, a portable computer disk, a hard disk, a random access memory (RAM), a read only memory (ROM), an erasable programmable read-only memory (EPROM or flash memory), an optical fiber, a compact disk read-only memory (CD-ROM), an optical storage device, a magnetic storage device, or any suitable combination of the foregoing.

In order to provide interaction with a user, the systems and techniques described herein may be implemented on a computer having: a display device (e.g., a CRT (cathode ray tube) or LCD (liquid crystal display) monitor) for displaying information to the user, and a keyboard and pointing device (e.g., a mouse or trackball) through which a user may provide input to the computer. Other kinds of devices may also be used to provide interaction with the user; for example, a feedback provided to the user may be any form of sensory feedback (e.g., a visual feedback, an auditory feedback, or a tactile feedback); and input from the user may be received in any form (including an acoustic input, a voice input, or a tactile input).

The systems and techniques described herein may be implemented on a computing system including a back-end component (e.g., as a data server), or a computing system including a middleware component (e.g., an application server), or a computing system including a front-end component (e.g., a user computer having a graphical user interface or web browser through which a user may interact with implementations of the systems and techniques described herein), or a computing system including any combination of the backend component, the middleware component, and the front-end component. The components of the system may be interconnected by any form or medium of digital data communication (e.g., a communication network). Examples of the communication network include: Local Area Network (LANs), Wide Area Network (WANs), and the Internet.

A computer system may include a client and a server. The client and the server are generally remote from each other and usually interact through a communication network. A relationship of client and server is generated by a computer program running on the corresponding computers and having a client-server relationship to each other. The server may be a cloud server, also known as a cloud computing server or a cloud host, which is a host product in the cloud computing service system, so as to solve defects of difficult management and weak business scalability in the traditional physical host and VPS ("Virtual Private Server") service. The server may also be a server of a distributed system, or a server combined with a blockchain.

According to another aspect of the embodiments of the present application, the embodiments of the present application further provide a computer program including program code, the computer program, when executed by a computer, is allowed to implement the method according to any of the embodiments described above.

It should be understood that steps may be reordered, added or deleted using the various forms of flow shown above. For example, the steps described in the present application may be executed in parallel, sequentially or in different orders, and as long as the desired results of the technical solutions disclosed in the present disclosure may be achieved, no limitation is imposed herein.

The specific embodiments described above do not constitute a limitation on the scope of protection of the present disclosure.

## Claims

1. A computer-implemented method for auxiliary processing of a software development, comprising:
identifying (S201, S303), according to an auxiliary operation command information input by a user, an auxiliary research and development function matched with the auxiliary operation command information in a local integrated development environment,
wherein the identifying, according to an auxiliary operation command information input by a user, an auxiliary research and development function matched with the auxiliary operation command information in a local integrated development environment comprises:
performing natural language processing on the auxiliary operation command information input by the user, so as to determine the auxiliary research and development function matched with the auxiliary operation command information; and
displaying an error prompt information in response to failing to determine the auxiliary research and development function matched with the auxiliary operation command information;
sending (S202, S304) an operation request to a service platform corresponding to the auxiliary research and development function in response to determining that the auxiliary research and development function is implemented by the corresponding service platform, wherein the operation request is configured to instruct the service platform to perform an operation corresponding to the auxiliary research and development function, and feed back an execution result of the auxiliary research and development function; and
acquiring (S203, S306) the execution result of the auxiliary research and development function,
wherein the sending (S202, S304) an operation request to a service platform corresponding to the auxiliary research and development function in response to determining that the auxiliary research and development function is implemented by the corresponding service platform, wherein the operation request is configured to instruct the service platform to perform an operation corresponding to the auxiliary research and development function, and feed back an execution result of the auxiliary research and development function, comprises:
acquiring, in response to the auxiliary research and development function being code scanning, a file in a current work region to obtain a development file to be processed;
sending a code scanning request to a code scanning platform, wherein the code scanning request comprises the development file to be processed, and the code scanning request is configured to instruct the code scanning platform to perform the code scanning on a coding standard problem, a defect problem, and a security loophole of the development file and return a code scanning result;
the acquiring (S203, S306) the execution result of the auxiliary research and development function comprises:
acquiring the code scanning result of the development file,
wherein the code scanning result comprises a defect report; after the acquiring the code scanning result of the development file, further comprising:
parsing the defect report, so as to locate a location of a defect in the development file;
marking a code line with the defect in the development file according to the location of the defect in the development file; and
displaying defect information corresponding to the marked code line in response to the marked code line being selected,
wherein after the acquiring the code scanning result of the development file, further comprising:
displaying link information of the defect report;
displaying and/or downloading the defect report in response to the link information of the defect report being triggered.

2. The method according to claim 1, wherein, the sending (S202, S304) an operation request to a service platform corresponding to the auxiliary research and development function in response to determining that the auxiliary research and development function is implemented by the corresponding service platform, wherein the operation request is configured to instruct the service platform to perform an operation corresponding to the auxiliary research and development function, and feed back an execution result of the auxiliary research and development function, comprises:
sending a compilation request to a compilation platform in response to the auxiliary research and development function being compilation, wherein the compilation request comprises information of a code to be compiled, and the compilation request is configured to instruct the compilation platform to compile the code to be compiled and obtain a compilation result file;
the acquiring (S203, S306) the execution result of the auxiliary research and development function comprises:
pulling the compilation result file into the local integrated development environment automatically.

3. The method according to claim 2, wherein the compilation request is further configured to instruct the compilation platform to record a compilation log; after the sending a compilation request to a compilation platform, further comprising:
displaying link information of the compilation log;
displaying and/or downloading the compilation log in response to the link information of the compilation log being triggered.

4. The method according to any one of claims 1-3, after the identifying (S201, S303), according to an auxiliary operation command information input by a user, an auxiliary research and development function matched with the auxiliary operation command information in a local integrated development environment, further comprising:
performing (S305), in response to determining that the auxiliary research and development function is implemented in the local integrated development environment, an operation corresponding to the auxiliary research and development function in the local integrated development environment and acquiring (S203, S306) the execution result of the auxiliary research and development function,
wherein, the performing (S305), in response to determining that the auxiliary research and development function is implemented in the local integrated development environment, an operation corresponding to the auxiliary research and development function in the local integrated development environment and acquiring (S203, S306) the execution result of the auxiliary research and development function comprises:
checking a coding standard problem in a current file in real time in response to the auxiliary research and development function being real-time error correction for coding standard;
displaying a location of the coding standard problem and problem description information of the coding standard problem in the current file,
wherein, the displaying a location of the coding standard problem and problem description information of the coding standard problem in the current file comprises:
marking a code line with the coding standard problem in the current file;
displaying the problem description information of the coding standard problem corresponding to the marked code line in response to the marked code line being selected.

5. The method according to claim 4, wherein, the performing (S305), in response to determining that the auxiliary research and development function is implemented in the local integrated development environment, an operation corresponding to the auxiliary research and development function in the local integrated development environment and acquiring (S203, S306) the execution result of the auxiliary research and development function, comprises:
correcting the coding standard problem in the current file in response to the auxiliary research and development function being coding standard formatting,
the method further comprising:
after the correcting the coding standard problem in the current file,
restoring the current file to a state before the correcting, in response to a formatting undo operation on the current file.

6. The method according to any one of claims 1 to 5, before the identifying (S201, S303), according to an auxiliary operation command information input by a user, an auxiliary research and development function matched with the auxiliary operation command information in a local integrated development environment, further comprising:
displaying (S301) a dialog box in a development interface of the local integrated development environment;
acquiring (S302) the auxiliary operation command information input by the user in the dialog box,
the method further comprising:
after the acquiring (S203, S306) the execution result of the auxiliary research and development function,
displaying (S307) the execution result in a dialog interaction manner in the dialog box,
the method further comprising:
after performing the operation corresponding to the auxiliary research and development function, and before the acquiring (S203, S306) the execution result of the auxiliary research and development function,
displaying, in the dialog box, a prompt information indicating that the auxiliary research and development function is being executed,
the method further comprising:
before displaying a dialog box in a development interface of the local integrated development environment,
installing an intelligent research and development assistant plug-in in the local integrated development environment, the intelligent research and development assistant plug-in being configured to realize the auxiliary processing of the software development.

7. An electronic device comprising:
at least one processor; and
a memory communicatively coupled to the at least one processor; wherein,
the memory stores instructions executable by the at least one processor, the instructions being executed by the at least one processor to enable the at least one processor to perform the method according to any one of claims 1 to 6.

8. A non-transitory computer readable storage medium having computer instructions stored thereon, wherein the computer instructions allow a computer to implement the method according to any one of claims 1 to 6.

9. A computer program product comprising a computer program, wherein the computer program, when executed by a processor, is allowed to implement the method according to any one of claims 1 to 6.

## Patentansprüche

1. Computerimplementiertes Verfahren für Hilfsverarbeitung einer Softwareentwicklung, umfassend:
Identifizieren (S201, S303), gemäß Hilfsbetriebsbefehlsinformationen, die von einem Benutzer eingegeben werden, einer Hilfsforschungs- und -entwicklungsfunktion, die mit den Hilfsbetriebsbefehlsinformationen in einer lokalen integrierten Entwicklungsumgebung übereinstimmt,
wobei das Identifizieren, gemäß Hilfsbetriebsbefehlsinformationen, die von einem Benutzer eingegeben werden, einer Hilfsforschungs- und -entwicklungsfunktion, die mit den Hilfsbetriebsbefehlsinformationen in einer lokalen integrierten Entwicklungsumgebung übereinstimmt, umfasst:
Durchführen natürlicher Sprachverarbeitung an den Hilfsbetriebsbefehlsinformationen, die von dem Benutzer eingegeben werden, um die Hilfsforschungs- und -entwicklungsfunktion zu bestimmen, die mit den Hilfsbetriebsbefehlsinformationen übereinstimmt; und
Anzeigen von Fehlermeldungsinformationen als Reaktion auf das Fehlschlagen der Bestimmung der Hilfsforschungs- und -entwicklungsfunktion, die mit den Hilfsbetriebsbefehlsinformationen übereinstimmt;
Senden (S202, S304) einer Betriebsanfrage an eine Serviceplattform, die der Hilfsforschungs- und -entwicklungsfunktion entspricht, als Reaktion auf die Bestimmung, dass die Hilfsforschungs- und - entwicklungsfunktion durch die entsprechende Serviceplattform implementiert wird, wobei die Betriebsanfrage konfiguriert ist, um die Serviceplattform anzuweisen, einen Vorgang durchzuführen, der der Hilfsforschungs- und -entwicklungsfunktion entspricht, und ein Ausführungsergebnis der Hilfsforschungs- und -entwicklungsfunktion zurückzumelden; und Erfassen (S203, S306) des Ausführungsergebnisses der Hilfsforschungs- und - entwicklungsfunktion,
wobei das Senden (S202, S304) einer Betriebsanfrage an eine Serviceplattform, die der Hilfsforschungs- und -entwicklungsfunktion entspricht, als Reaktion auf die Bestimmung, dass die Hilfsforschungs- und -entwicklungsfunktion durch die entsprechende Serviceplattform implementiert wird, wobei die Betriebsanfrage konfiguriert ist, um die Serviceplattform anzuweisen, einen Vorgang durchzuführen, der der Hilfsforschungs- und -entwicklungsfunktion entspricht, und ein Ausführungsergebnis der Hilfsforschungs- und -entwicklungsfunktion zurückzumelden, umfasst: Erfassen, als Reaktion darauf, dass die Hilfsforschungs- und -entwicklungsfunktion Code-Scanning ist, einer Datei in einem aktuellen Arbeitsbereich, um eine zu verarbeitende Entwicklungsdatei zu erhalten;
Senden einer Code-Scanning-Anfrage an eine Code-Scanning-Plattform, wobei die Code-Scanning-Anfrage die zu verarbeitende Entwicklungsdatei umfasst, und die Code-Scanning-Anfrage konfiguriert ist, um die Code-Scanning-Plattform anzuweisen, das Code-Scanning an einem Codierungsstandardproblem, einem Fehlerproblem und einer Sicherheitslücke der Entwicklungsdatei durchzuführen und ein Code-Scanning-Ergebnis zurückzugeben;
das Erfassen (S203, S306) des Ausführungsergebnisses der Hilfsforschungs- und - entwicklungsfunktion umfasst:
Erfassen des Code-Scanning-Ergebnisses der Entwicklungsdatei,
wobei das Code-Scanning-Ergebnis einen Fehlerbericht umfasst; nach dem Erfassen des Code-Scanning-Ergebnisses der Entwicklungsdatei, ferner umfassend:
Analysieren des Fehlerberichts, um einen Ort eines Fehlers in der Entwicklungsdatei zu lokalisieren;
Markieren einer Codezeile mit dem Fehler in der Entwicklungsdatei gemäß dem Ort des Fehlers in der Entwicklungsdatei; und
Anzeigen von Fehlerinformationen, die der markierten Codezeile entsprechen, als Reaktion darauf, dass die markierte Codezeile ausgewählt wird,
wobei nach dem Erfassen des Code-Scanning-Ergebnisses der Entwicklungsdatei, ferner umfassend:
Anzeigen von Verknüpfungsinformationen des Fehlerberichts;
Anzeigen und/oder Herunterladen des Fehlerberichts als Reaktion darauf, dass die Verknüpfungsinformationen des Fehlerberichts ausgelöst werden.

2. Verfahren nach Anspruch 1, wobei das Senden (S202, S304) einer Betriebsanfrage an eine Serviceplattform, die der Hilfsforschungs- und -entwicklungsfunktion entspricht, als Reaktion auf die Bestimmung, dass die Hilfsforschungs- und -entwicklungsfunktion durch die entsprechende Serviceplattform implementiert wird, wobei die Betriebsanfrage konfiguriert ist, um die Serviceplattform anzuweisen, einen Vorgang durchzuführen, der der Hilfsforschungs- und - entwicklungsfunktion entspricht, und ein Ausführungsergebnis der Hilfsforschungs- und - entwicklungsfunktion zurückzumelden, umfasst:
Senden einer Kompilierungsanfrage an eine Kompilierungsplattform als Reaktion darauf, dass die Hilfsforschungs- und -entwicklungsfunktion Kompilierung ist, wobei die Kompilierungsanfrage Informationen eines zu kompilierenden Codes umfasst, und die Kompilierungsanfrage konfiguriert ist, um die Kompilierungsplattform anzuweisen, den zu kompilierenden Code zu kompilieren und eine Kompilierungsergebnisdatei zu erhalten;
das Erfassen (S203, S306) des Ausführungsergebnisses der Hilfsforschungs- und - entwicklungsfunktion umfasst:
Ziehen der Kompilierungsergebnisdatei in die lokale integrierte Entwicklungsumgebung automatisch.

3. Verfahren nach Anspruch 2, wobei die Kompilierungsanfrage ferner konfiguriert ist, um die Kompilierungsplattform anzuweisen, ein Kompilierungsprotokoll aufzuzeichnen; nach dem Senden einer Kompilierungsanfrage an eine Kompilierungsplattform, ferner umfassend:
Anzeigen von Verknüpfungsinformationen des Kompilierungsprotokolls;
Anzeigen und/oder Herunterladen des Kompilierungsprotokolls als Reaktion darauf, dass die Verknüpfungsinformationen des Kompilierungsprotokolls ausgelöst werden.

4. Verfahren nach einem der Ansprüche 1 bis 3, nach dem Identifizieren (S201, S303), gemäß Hilfsbetriebsbefehlsinformationen, die von einem Benutzer eingegeben werden, einer Hilfsforschungs- und -entwicklungsfunktion, die mit den Hilfsbetriebsbefehlsinformationen in einer lokalen integrierten Entwicklungsumgebung übereinstimmt, ferner umfassend:
Durchführen (S305), als Reaktion auf die Bestimmung, dass die Hilfsforschungs- und - entwicklungsfunktion in der lokalen integrierten Entwicklungsumgebung implementiert wird, eines Vorgangs, der der Hilfsforschungs- und -entwicklungsfunktion entspricht, in der lokalen integrierten Entwicklungsumgebung und Erfassen (S203, S306) des Ausführungsergebnisses der Hilfsforschungs- und -entwicklungsfunktion,
wobei das Durchführen (S305), als Reaktion auf die Bestimmung, dass die Hilfsforschungs- und - entwicklungsfunktion in der lokalen integrierten Entwicklungsumgebung implementiert wird, eines Vorgangs, der der Hilfsforschungs- und -entwicklungsfunktion entspricht, in der lokalen integrierten Entwicklungsumgebung und Erfassen (S203, S306) des Ausführungsergebnisses der Hilfsforschungs- und -entwicklungsfunktion umfasst:
Überprüfen eines Codierungsstandardproblems in einer aktuellen Datei in Echtzeit als Reaktion darauf, dass die Hilfsforschungs- und -entwicklungsfunktion Echtzeit-Fehlerkorrektur für Codierungsstandard ist;
Anzeigen eines Orts des Codierungsstandardproblems und von Problembeschreibungsinformationen des Codierungsstandardproblems in der aktuellen Datei,
wobei das Anzeigen eines Orts des Codierungsstandardproblems und von Problembeschreibungsinformationen des Codierungsstandardproblems in der aktuellen Datei umfasst:
Markieren einer Codezeile mit dem Codierungsstandardproblem in der aktuellen Datei;
Anzeigen der Problembeschreibungsinformationen des Codierungsstandardproblems, die der markierten Codezeile entsprechen, als Reaktion darauf, dass die markierte Codezeile ausgewählt wird.

5. Verfahren nach Anspruch 4, wobei das Durchführen (S305), als Reaktion auf die Bestimmung, dass die Hilfsforschungs- und -entwicklungsfunktion in der lokalen integrierten Entwicklungsumgebung implementiert wird, eines Vorgangs, der der Hilfsforschungs- und - entwicklungsfunktion entspricht, in der lokalen integrierten Entwicklungsumgebung und Erfassen (S203, S306) des Ausführungsergebnisses der Hilfsforschungs- und -entwicklungsfunktion umfasst:
Korrigieren des Codierungsstandardproblems in der aktuellen Datei als Reaktion darauf, dass die Hilfsforschungs- und -entwicklungsfunktion Codierungsstandardformatierung ist,
wobei das Verfahren ferner umfasst:
nach dem Korrigieren des Codierungsstandardproblems in der aktuellen Datei,
Wiederherstellen der aktuellen Datei zu einem Zustand vor dem Korrigieren, als Reaktion auf einen Formatierungsrückgängigmachungsvorgang an der aktuellen Datei.

6. Verfahren nach einem der Ansprüche 1 bis 5, vor dem Identifizieren (S201, S303), gemäß Hilfsbetriebsbefehlsinformationen, die von einem Benutzer eingegeben werden, einer Hilfsforschungs- und -entwicklungsfunktion, die mit den Hilfsbetriebsbefehlsinformationen in einer lokalen integrierten Entwicklungsumgebung übereinstimmt, ferner umfassend:
Anzeigen (S301) eines Dialogfelds in einer Entwicklungsschnittstelle der lokalen integrierten Entwicklungsumgebung;
Erfassen (S302) der Hilfsbetriebsbefehlsinformationen, die von dem Benutzer in dem Dialogfeld eingegeben werden,
wobei das Verfahren ferner umfasst:
nach dem Erfassen (S203, S306) des Ausführungsergebnisses der Hilfsforschungs- und - entwicklungsfunktion,
Anzeigen (S307) des Ausführungsergebnisses in einer Dialog-Interaktionsweise in dem Dialogfeld, wobei das Verfahren ferner umfasst:
nach dem Durchführen des Vorgangs, der der Hilfsforschungs- und -entwicklungsfunktion entspricht, und vor dem Erfassen (S203, S306) des Ausführungsergebnisses der Hilfsforschungs- und -entwicklungsfunktion,
Anzeigen, in dem Dialogfeld, von Eingabeaufforderungsinformationen, die anzeigen, dass die Hilfsforschungs- und -entwicklungsfunktion ausgeführt wird,
wobei das Verfahren ferner umfasst:
vor dem Anzeigen eines Dialogfelds in einer Entwicklungsschnittstelle der lokalen integrierten Entwicklungsumgebung,
Installieren eines intelligenten Forschungs- und Entwicklungsassistent-Plugins in der lokalen integrierten Entwicklungsumgebung, wobei das intelligente Forschungs- und Entwicklungsassistent-Plugin konfiguriert ist, um die Hilfsverarbeitung der Softwareentwicklung zu realisieren.

7. Elektronische Vorrichtung, umfassend:
mindestens einen Prozessor; und
einen Speicher, der kommunikativ mit dem mindestens einen Prozessor gekoppelt ist; wobei der Speicher Anweisungen speichert, die durch den mindestens einen Prozessor ausführbar sind, wobei die Anweisungen durch den mindestens einen Prozessor ausgeführt werden, um den mindestens einen Prozessor zu befähigen, das Verfahren nach einem der Ansprüche 1 bis 6 durchzuführen.

8. Nichtflüchtiges computerlesbares Speichermedium mit darauf gespeicherten Computeranweisungen, wobei die Computeranweisungen einem Computer ermöglichen, das Verfahren nach einem der Ansprüche 1 bis 6 zu implementieren.

9. Computerprogrammprodukt, umfassend ein Computerprogramm, wobei das Computerprogramm, wenn es durch einen Prozessor ausgeführt wird, ermöglicht wird, das Verfahren nach einem der Ansprüche 1 bis 6 zu implementieren.

## Revendications

1. Procédé mis en œuvre par ordinateur pour traitement auxiliaire d'un développement logiciel, comprenant :
identification (S201, S303), selon des informations de commande d'opération auxiliaire saisies par un utilisateur, d'une fonction de recherche et développement auxiliaire qui correspond aux informations de commande d'opération auxiliaire dans un environnement de développement intégré local,
dans lequel l'identification, selon des informations de commande d'opération auxiliaire saisies par un utilisateur, d'une fonction de recherche et développement auxiliaire qui correspond aux informations de commande d'opération auxiliaire dans un environnement de développement intégré local comprend :
exécution de traitement du langage naturel sur les informations de commande d'opération auxiliaire saisies par l'utilisateur, de manière à déterminer la fonction de recherche et développement auxiliaire qui correspond aux informations de commande d'opération auxiliaire ; et
affichage d'informations d'invite d'erreur en réponse à l'échec de détermination de la fonction de recherche et développement auxiliaire qui correspond aux informations de commande d'opération auxiliaire ;
envoi (S202, S304) d'une demande d'opération à une plateforme de service qui correspond à la fonction de recherche et développement auxiliaire en réponse à la détermination que la fonction de recherche et développement auxiliaire est mise en œuvre par la plateforme de service correspondante, dans lequel la demande d'opération est configurée pour donner instruction à la plateforme de service d'exécuter une opération qui correspond à la fonction de recherche et développement auxiliaire, et de renvoyer un résultat d'exécution de la fonction de recherche et développement auxiliaire ; et
acquisition (S203, S306) du résultat d'exécution de la fonction de recherche et développement auxiliaire,
dans lequel l'envoi (S202, S304) d'une demande d'opération à une plateforme de service qui correspond à la fonction de recherche et développement auxiliaire en réponse à la détermination que la fonction de recherche et développement auxiliaire est mise en œuvre par la plateforme de service correspondante, dans lequel la demande d'opération est configurée pour donner instruction à la plateforme de service d'exécuter une opération qui correspond à la fonction de recherche et développement auxiliaire, et de renvoyer un résultat d'exécution de la fonction de recherche et développement auxiliaire, comprend :
acquisition, en réponse au fait que la fonction de recherche et développement auxiliaire est une analyse de code, d'un fichier dans une région de travail actuelle pour obtenir un fichier de développement à traiter ;
envoi d'une demande d'analyse de code à une plateforme d'analyse de code, dans lequel la demande d'analyse de code comprend le fichier de développement à traiter, et la demande d'analyse de code est configurée pour donner instruction à la plateforme d'analyse de code d'exécuter l'analyse de code sur un problème de norme de codage, un problème de défaut, et une faille de sécurité du fichier de développement et de renvoyer un résultat d'analyse de code ;
l'acquisition (S203, S306) du résultat d'exécution de la fonction de recherche et développement auxiliaire comprend :
acquisition du résultat d'analyse de code du fichier de développement,
dans lequel le résultat d'analyse de code comprend un rapport de défaut ; après l'acquisition du résultat d'analyse de code du fichier de développement, comprenant en outre :
analyse du rapport de défaut, de manière à localiser un emplacement d'un défaut dans le fichier de développement ;
marquage d'une ligne de code avec le défaut dans le fichier de développement selon l'emplacement du défaut dans le fichier de développement ; et
affichage d'informations de défaut qui correspondent à la ligne de code marquée en réponse à la sélection de la ligne de code marquée,
dans lequel après l'acquisition du résultat d'analyse de code du fichier de développement, comprenant en outre :
affichage d'informations de lien du rapport de défaut ;
affichage et/ou téléchargement du rapport de défaut en réponse au déclenchement des informations de lien du rapport de défaut.

2. Procédé selon la revendication 1, dans lequel, l'envoi (S202, S304) d'une demande d'opération à une plateforme de service qui correspond à la fonction de recherche et développement auxiliaire en réponse à la détermination que la fonction de recherche et développement auxiliaire est mise en œuvre par la plateforme de service correspondante, dans lequel la demande d'opération est configurée pour donner instruction à la plateforme de service d'exécuter une opération qui correspond à la fonction de recherche et développement auxiliaire, et de renvoyer un résultat d'exécution de la fonction de recherche et développement auxiliaire, comprend :
envoi d'une demande de compilation à une plateforme de compilation en réponse au fait que la fonction de recherche et développement auxiliaire est une compilation, dans lequel la demande de compilation comprend des informations d'un code à compiler, et la demande de compilation est configurée pour donner instruction à la plateforme de compilation de compiler le code à compiler et d'obtenir un fichier de résultat de compilation ;
l'acquisition (S203, S306) du résultat d'exécution de la fonction de recherche et développement auxiliaire comprend :
extraction du fichier de résultat de compilation dans l'environnement de développement intégré local automatiquement.

3. Procédé selon la revendication 2, dans lequel la demande de compilation est en outre configurée pour donner instruction à la plateforme de compilation d'enregistrer un journal de compilation ; après l'envoi d'une demande de compilation à une plateforme de compilation, comprenant en outre :
affichage d'informations de lien du journal de compilation ;
affichage et/ou téléchargement du journal de compilation en réponse au déclenchement des informations de lien du journal de compilation.

4. Procédé selon l'une quelconque des revendications 1 à 3, après l'identification (S201, S303), selon des informations de commande d'opération auxiliaire saisies par un utilisateur, d'une fonction de recherche et développement auxiliaire qui correspond aux informations de commande d'opération auxiliaire dans un environnement de développement intégré local, comprenant en outre :
exécution (S305), en réponse à la détermination que la fonction de recherche et développement auxiliaire est mise en œuvre dans l'environnement de développement intégré local, d'une opération qui correspond à la fonction de recherche et développement auxiliaire dans l'environnement de développement intégré local et acquisition (S203, S306) du résultat d'exécution de la fonction de recherche et développement auxiliaire,
dans lequel, l'exécution (S305), en réponse à la détermination que la fonction de recherche et développement auxiliaire est mise en oeuvre dans l'environnement de développement intégré local, d'une opération qui correspond à la fonction de recherche et développement auxiliaire dans l'environnement de développement intégré local et l'acquisition (S203, S306) du résultat d'exécution de la fonction de recherche et développement auxiliaire comprend :
vérification d'un problème de norme de codage dans un fichier actuel en temps réel en réponse au fait que la fonction de recherche et développement auxiliaire est une correction d'erreur en temps réel pour norme de codage ;
affichage d'un emplacement du problème de norme de codage et d'informations de description de problème du problème de norme de codage dans le fichier actuel,
dans lequel, l'affichage d'un emplacement du problème de norme de codage et d'informations de description de problème du problème de norme de codage dans le fichier actuel comprend :
marquage d'une ligne de code avec le problème de norme de codage dans le fichier actuel ;
affichage des informations de description de problème du problème de norme de codage qui correspondent à la ligne de code marquée en réponse à la sélection de la ligne de code marquée.

5. Procédé selon la revendication 4, dans lequel, l'exécution (S305), en réponse à la détermination que la fonction de recherche et développement auxiliaire est mise en œuvre dans l'environnement de développement intégré local, d'une opération qui correspond à la fonction de recherche et développement auxiliaire dans l'environnement de développement intégré local et l'acquisition (S203, S306) du résultat d'exécution de la fonction de recherche et développement auxiliaire, comprend :
correction du problème de norme de codage dans le fichier actuel en réponse au fait que la fonction de recherche et développement auxiliaire est un formatage de norme de codage,
le procédé comprenant en outre :
après la correction du problème de norme de codage dans le fichier actuel,
restauration du fichier actuel à un état avant la correction, en réponse à une opération d'annulation de formatage sur le fichier actuel.

6. Procédé selon l'une quelconque des revendications 1 à 5, avant l'identification (S201, S303), selon des informations de commande d'opération auxiliaire saisies par un utilisateur, d'une fonction de recherche et développement auxiliaire qui correspond aux informations de commande d'opération auxiliaire dans un environnement de développement intégré local, comprenant en outre :
affichage (S301) d'une boîte de dialogue dans une interface de développement de l'environnement de développement intégré local ;
acquisition (S302) des informations de commande d'opération auxiliaire saisies par l'utilisateur dans la boîte de dialogue,
le procédé comprenant en outre :
après l'acquisition (S203, S306) du résultat d'exécution de la fonction de recherche et développement auxiliaire,
affichage (S307) du résultat d'exécution d'une manière d'interaction de dialogue dans la boîte de dialogue,
le procédé comprenant en outre :
après l'exécution de l'opération qui correspond à la fonction de recherche et développement auxiliaire, et avant l'acquisition (S203, S306) du résultat d'exécution de la fonction de recherche et
développement auxiliaire,
affichage, dans la boîte de dialogue, d'informations d'invite indiquant que la fonction de recherche et développement auxiliaire est en cours d'exécution,
le procédé comprenant en outre :
avant l'affichage d'une boîte de dialogue dans une interface de développement de l'environnement de développement intégré local,
installation d'un plug-in d'assistant de recherche et développement intelligent dans l'environnement de développement intégré local, le plug-in d'assistant de recherche et développement intelligent étant configuré pour réaliser le traitement auxiliaire du développement logiciel.

7. Dispositif électronique comprenant :
au moins un processeur ; et
une mémoire couplée en communication avec l'au moins un processeur ; dans lequel,
la mémoire stocke des instructions exécutables par l'au moins un processeur, les instructions étant exécutées par l'au moins un processeur pour permettre à l'au moins un processeur d'exécuter le procédé selon l'une quelconque des revendications 1 à 6.

8. Support de stockage lisible par ordinateur non transitoire ayant des instructions informatiques stockées sur celui-ci, dans lequel les instructions informatiques permettent à un ordinateur de mettre en œuvre le procédé selon l'une quelconque des revendications 1 à 6.

9. Produit de programme informatique comprenant un programme informatique, dans lequel le programme informatique, lorsqu'il est exécuté par un processeur, est autorisé à mettre en œuvre le procédé selon l'une quelconque des revendications 1 à 6.
